# EUROPÄISCHE PATENTSCHRIFT

(11) **EP 2 064 936 B1**
(45) Veröffentlichungstag und Bekanntmachung des Hinweises auf die Patenterteilung: **07.10.2015**
(21) Anmeldenummer: 08014281.3
(22) Anmeldetag: 11.08.2008
(51) Int. Cl.: A01D 90/08, A01F 15/08

(54) **Verfahren und Einrichtung zum Stapeln von Halmgutballen**
Method and device for stacking halm bales
Procédé et dispositif d'empilement de balles de matière en brins

(30) Priorität: 09.08.2007 DE 102007037732
(43) Veröffentlichungstag der Anmeldung: 03.06.2009
(73) Patentinhaber: Oexle, Ulrich, 88682 Salem (DE)
(72) Erfinder: Oexle, Ulrich, 88682 Salem (DE)
(74) Vertreter: Patentanwälte und Rechtsanwalt Weiß, Arat & Partner mbB

(56) Entgegenhaltungen:
- EP-A- 0 389 321
- EP-A- 0 622 012
- EP-A- 0 631 715
- EP-A- 0 687 408
- FR-A- 2 488 772

## Beschreibung

Die Erfindung betrifft ein. Verfahren zum Stapeln von Halmgutballen, welche eine Ballenpresse unmittelbar als gepresste Ballen verlassen.

Ballenpressen dienen in der Landwirtschaft vor allem um anfallendes Heu, Stroh oder sonstige Halme zu Ballen zu pressen, sodass dieses Halmgut platzsparend gelagert werden kann. Dabei werden die Ballenpressen in der Regel von einem Traktor gezogen und über dessen Zapfwelle angetrieben. Mit Ballenpressen werden meist Rund- oder Quaderballen hergestellt, wobei die Rundballen über kurze Strecken auch gerollt und die Quaderballen hauptsächlich bei größeren Abmessungen nur mit einem Frontlader bewegt werden können.

Die zur Herstellung von Quaderballen üblichen Ballenpressen arbeiten hierbei in folgenden Arbeitsschritten: Das zu pressende Halmgut wird mittels einer quer zur Fahrtrichtung angeordneten rotierenden Trommel mit nachgiebigen Federzinken vom Boden aufgenommen und in einem darüber befindlichen Kanal befördert, indem sich ein sogenannter Raffer bewegt, der das Halmgut in einen Presskanal schiebt, in dem ein Kolben das Halmgut nach hinten schiebt und zu einem Ballen komprimiert.

Ein derart hergestellter Quaderballen wird dann, nach dem er gebunden wurde, durch den nachfolgenden Quaderballen aus dem Presskanal gedrückt und fällt sodann hinter der Ballenpresse auf den Boden. Alternativ dazu ist es auch bekannt, an die Ballenpresse einen Anhänger mit einer Stapelvorrichtung anzuhängen, mit der Stapel von Pressballen erzeugt und dann auf dem Feld abgesetzt werden können, um den Abtransport vom Feld zu optimieren.

Ein derartiger Anhänger, der an eine bereits an einem Traktor angehängte Ballenpresse angehängt wird, schränkt jedoch die Manövrierfähigkeit eines solchen fahrbaren Arbeitsgerätes sehr ein, und zwar insbesondere beim Rückwärtsfahren und beim Fahren in einer Hanglage, d. h. die Gesamtlänge ist einfach zu lang, um damit verkehrssicher und wirtschaftlich arbeiten zu können.

So zeigt bspw. die EP 0 631 715 A1 eine Vorrichtung und ein Verfahren zum Stapeln von Ballen. Die Vorrichtung zum Stapeln von quaderförmigen Ballen ist über eine Anhängeeinrichtung mit einer Ballenpresse verbunden. Sowohl die Ballenpresse, wie auch die Vorrichtung zum Stapeln sind als separate Anhänger ausgebildet..

Hier setzt die Erfindung ein, der die Aufgabe zugrunde liegt, ein Verfahren und eine Einrichtung zum Stapeln von Halmgutballen zu schaffen, womit eine wendige und wartungsarme Arbeitsweise auf dem Feld möglich ist. Ferner soll bei möglichst geringen Herstellungskosten die Möglichkeit gegeben sein, Halmgutballen mit unterschiedlichen, individuell eingestellten Längen problemlos zu stapeln.

Diese Aufgabe wird erfindungsgemäß nach den Merkmalen des Anspruchs 1 und 9 gelöst. Bei einem erfindungsgemäßen Verfahren durchlaufen die aus dem Presskanal kommenden gepressten Halmgutballen nach dem Verlassen der gesamten Ballenpresse einen mit dieser eine Einheit bildenden Stapler und werden dabei in diesem gestapelt. Dadurch verkürzt sich vorteilhaft die gesamte Baulänge der Arbeitsgerätschaft Ballenpresse/Stapler bei gleichzeitiger Erhöhung ihrer Wendigkeit. Hierbei ist es bei größeren Gewichten der einzelnen Ballen zweckmäßig, dass zumindest zwei Halmgutballen übereinander in dem Stapler gestapelt und dann als Doppelpack beim Fahren der Ballenpresse z. B. auf einem Feld abgelegt werden. Da die das Doppelpack bildenden Halmgutballen praktisch deckungsgleich aufeinander liegen, verringert sich dadurch vorteilhaft die Anzahl der Flächen, die einem unmittelbaren Witterungseinfluss ausgesetzt sind. Ferner muss bei einem Doppelpack ein Frontlader zu dessen Abtransport nur halb so oft anfahren als bei einem Einzelabwurf aus einer herkömmlichen Ballenpresse.

In Ausgestaltung des erfindungsgemäßen Verfahrens ist es von Vorteil, wenn ein die Ballenpresse verlassender erster Halmgutballen zuerst in den Stapler transportiert und dann nach Erreichen seiner Stapelanfangslage von dem Stapler auf mindestens eine Höhe gehoben wird, die größer ist als die Höhe eines nachfolgenden zweiten Halmgutballens; sodann der zweite Halmgutballen unter den angehobenen ersten Halmgutballen bis zu dessen Stapelanfangslage transportiert wird und daraufhin der erste angehobene Halmgutballen auf den zweiten Halmgutballen abgesenkt sowie anschließend das entstandene Doppelpack, bestehend aus dem ersten und dem zweiten Halmgutballen, zur Ablage auf das Feld aus dem Stapler abgeführt wird.

Da alle Bewegungsabläufe in einem Stapler zeitlich genauestens aufeinander abgestimmt sein müssen, damit es nicht zu erheblichen Beschädigungen an diesem kommen kann, ist es zweckmäßig, dass der Ablauf des erfindungsgemäßen Verfahrens durch Sensoren, wie induktive Näherungsschalter und Drucksensoren durchgeführt wird.

Als einfacher und für diesen Zweck relativ unempfindlicher Näherungsschalter eignet sich beispielsweise ein sogenanntes Tast- bzw. Sternrad oder dgl., das die Bewegungslage jedes aus der Ballenpresse kommenden Halmgutballens derart erfasst, dass dieses mit dem jeweiligen Halmgutballen in Berührung gebracht und mit Erreichen einer Ballenkante abgesenkt wird, wodurch ein Signal über die Lage des Halmgutballens abgegeben wird.

In weiterer Ausgestaltung des erfindungsgemäßen Verfahrens ist vorgesehen, dass in der Grundstellung des Staplers ein aus der Ballenpresse kommender Halmgutballen bis zu einer Stapelanfangslage innerhalb des Staplers transportiert wird, sodann ein Signal erfolgt, welches Greifarme mit Klemmplatten in Bewegung setzt, zwischen denen zuerst der Halmgutballen eingeklemmt und danach durch die Greifarme bis zu einer Höhe angehoben wird, die größer ist als die Höhe eines nachfolgenden Halmgutballens.

Um immer eine konstante Klemmkraft der Klemmplatten beim Klemmen zu gewährleisten, ist es von Vorteil, wenn der Klemmdruck der Klemmplatten über einen Drucksensor eingestellt wird. Ferner begrenzen flächige Klemmplatten nicht die jeweilige Größe der zu stapelnden Halmgutballen, da sie praktisch nur wie eine Art Zange wirken.

Auch ist es zweckmäßig, dass mit Ankunft des dem angehobenen Halmgutballen nachfolgenden Halmgutballen in seiner Stapelanfangslage ein Signal initiiert wird, wodurch sich der Greifarm des Staplers absenkt und durch ein Öffnen der Klemmplatten den vorher eingeklemmten Halmgutballen zur Auflage auf den darunter positionierten Halmgutballen freigibt, wobei dann die so zu einem Doppelpack gestapelten Halmgutballen weitertransportiert und auf einem Feld abgelegt werden.

Damit ein Doppelpack beim Ablegen auf einem Feld nicht kippen und dabei wieder auseinander fallen kann, hat es sich bewährt, dass hierzu ein Niederhalters beim Durchführen des Ablegens verwendet wird.

Zur Lösung dieser Aufgabe führt, dass die gepressten Halmgutballen nach dem Verlassen der Ballenpresse einen mit dieser eine Einheit bildenden Stapler durchlaufen und dabei in diesem gestapelt werden.

Für den eigentlichen Stapelvorgang als solcher, haben sich vertikale Klemmplatten bewährt, die an den freien Endabschnitten der Greifarme angeordnet und horizontal mit Hilfe von hydraulischen Klemmzylindern nach der Art einer Zange mit parallelen Backen verstellbar sind. Dadurch ist ein Stapeln von Halmgutballen mit unterschiedlichen Abmessungen problemlos möglich.

Um beim Stapeln immer eine konstante Klemmkraft zum Einklemmen der Halmgutballen gewährleisten zu können, ist es günstig, wenn die Klemmzylinder zur Einstellung eines geeigneten Klemmdrucks mit einem Druckschalter in Verbindung stehen. Dieser schaltet dann unabhängig von einem zurückgelegten Hub des jeweiligen Hydraulikzylinders (.variiert je nach Nachgiebigkeit des Ballens) beim Erreichen der erforderlichen Klemmkraft den weiteren Klemmvorgang ab. Dabei kann die Haltekraft der Klemmplatten noch hinsichtlich eines vertikalen Abrutschens der Halmgutballen dadurch verbessert werden, dass die Klemmplatten auf ihren der Halmgutballen zugewandten Innenflächen Verankerungen, z. B. in der Form von dreieckförmigen Reitern, aufweisen.

Damit die gestapelten Halmgutballen bei einem Absetzen vom Stapler z. B. auf den Boden eines Feldes ihre Stapelform nicht verändern können, ist es in einer weiteren Ausgestaltung der Erfindung von Vorteil, wenn oberhalb der Klemmplatten an den Greifarmen Niederhalter zum Führen der gestapelten Halmgutballen vorgesehen sind, wobei für diese Gummiräder, Kufen oder dgl. dienen können.

Insbesondere für die Bewegungsabläufe des Staplers ist es wichtig, dass diese zeitlich aufeinander abgestimmt sind, weswegen es günstig ist, wenn sämtliche Ablaufbewegungen des Staplers durch Sensoren, wie induktive Näherungsschalter und dgl. bestimmt sind, welche an entsprechenden Stellen angeordnet und miteinander in bekannter Weise verknüpft sind. Zusätzlich können zur Bestimmung der Ablaufbewegungen der Halmgutballen von diesen antreibbare Tast- bzw. Sternräder verwendet werden, mit welchen insbesondere eine Wegbegrenzung jedes in den Stapler einlaufenden Halmgutballens möglich ist. Hierzu ordnet man diese Tast- bzw. Sternräder im Einlaufbereich des Staplers an und bringt sie gleichzeitig in Wirkverbindung mit den Sensoren der Greifarme. Letztere werden zweckmäßigerweise an den Greifarmen derart angeordnet, dass durch sie eine untere und eine obere Position der Greifarme bestimmbar ist. Hierbei stellt die obere Position der Greifarme mit einem ersten angehobenen und durch die Klemmplatten gehaltenen Halmgutballen eine derartige Höhe dar, die größer ist als die Höhe eines nachfolgenden zweiten Halmgutballens zur Bildung eines Doppelpacks.

Als Lauffläche für die Halmgutballen innerhalb des Staplers kann in einfacher Weise eine Rollenbahn in der Art einer Ballenrutsche dienen, die dann über mindestens zwei jeweils seitlich angeordneten Zugträgern, wie Ketten, Seile oder dgl. zugbrückenartig an der Ballenpresse gehalten ist.

Schließlich ist es von Vorteil, wenn zumindest die Steuerung des Staplers so ausgelegt ist, dass dessen Bewegungsabläufe entweder automatisch oder manuell ablaufen können.

Ferner soll im Rahmen der vorliegenden Erfindung liegen, dass der Stapler, der über entsprechende Greifarme verschwenkbar mit der Ballenpresse verbunden ist, bei nicht Gebrauch nach oben aus dem Wirkbereich bzw. aus dem rückseitigen Bereich der Ballenpresse herausschwenkbar ist.

Somit kann die Ballenpresse wie herkömmlich betrieben werden, wobei gleichzeitig bzw. auch zu Transportzwecken eine geforderte Gesamtlänge nicht überschnitten wird. Weitere Einzelheiten und Vorteile der vorliegenden Erfindung ergeben sich aus der nachfolgenden Beschreibung eines Ausführungsbeispiels in Verbindung mit der Zeichnung; darin zeigt:
- Fig. 1: eine vereinfacht dargestellte Seitenansicht einer Einrichtung mit dem Auslaufabschnitt einer Ballenpresse und einen an diesem angebrachten Stapler mit einem ersten Halmgutballen in Grundstellung,
- Fig. 2: die Darstellung gemäß Fig. 1, jedoch mit dessen angehobenen Halmgutballen in seiner oberen Position,
- Fig. 3: die Darstellung gemäß Fig- 2, jedoch mit einem zweiten Halmgutballen, auf den der erste Halmgutballen abgesetzt worden ist und
- Fig. 4: eine Draufsicht auf die Einrichtung gemäß Fig. 3.

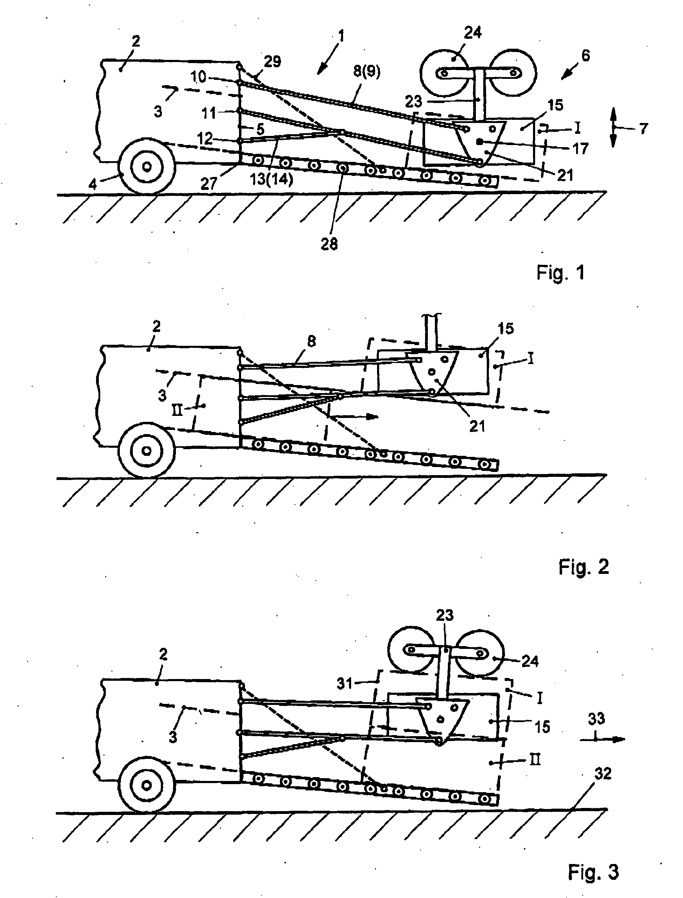

Die in Fig. 1 vereinfacht in Seitenansicht dargestellte Einrichtung zum Stapeln von Halmgutballen I und II-bezeichnet mit 1 - umfasst eine herkömmliche Ballenpresse 2 mit einem gestrichelt angedeuteten Presskanal 3, wobei die Ballenpresse 2 auf Rädern 4 fahrbar ist und durch einen nicht dargestellten Traktor gezogen und durch dessen Zapfwelle angetrieben wird.

Am mit 5 bezeichneten freien Endabschnitt des Presskanals 3 schließt sich unmittelbar ein insgesamt mit 6 bezeichneter Stapler an, der zwei parallel im Abstand zueinander angeordnete und in der Vertikalen - angedeutet durch den Doppelpfeil 7 - schwenkbare als Parallelogramm ausgebildete Greifarme 8 und 9 besitzt, die an der Ballenpresse 2 bei 10 - 12 bzw. 10'- 12' angelenkt sind. Jeder Greifarm 8 bzw. 9 ist mittels eines Hydraulikzylinders 13 bzw. 14 begrenzt schwenkbar und besitzt an seinem freien Endabschnitt vertikal verlaufende Klemmplatten 15 bzw. 16 zum Einklemmen des Halmgutballens I.

Die Klemmplatten 15 bzw. 16 sind jeweils mittels eines hydraulischen Klemmzylinders 17 bzw. 18 horizontal verstellbar, was durch die Doppelpfeile 19 in Fig. 3 angedeutet ist. Die Hydraulikzylinder 17 bzw. 18 sind jeweils zur Einstellung eines geeigneten Klemmdrucks mit einem nicht dargestellten Druckmesser verbunden, mit welchem der Hydraulikdruck am jeweiligen Klemmzylinder 17 bzw. 18 überprüft wird und dann ein Signal abgibt, wenn ein einstellbarer Klemmdruck erreicht ist. Die flächig ausgebildeten Klemmplatten 15 bzw. 16 besitzen auf ihren den Halmgutballen I bzw. II zugewandten Innenflächen im Querschnitt dreieckförmig Verankerungen 20, sodass damit die Halmgutballen aufgrund ihrer offenporigen Oberflächen besser gehalten werden können.

Jeder Greifarm 8 bzw. 9 hat die Form eines Parallelogramms und besitzt an seinem freien Ende einen Lagerbock 21 bzw. 22, in welchem auch der jeweilige hydraulische Klemmzylinder 17 bzw. 18 gehalten ist.

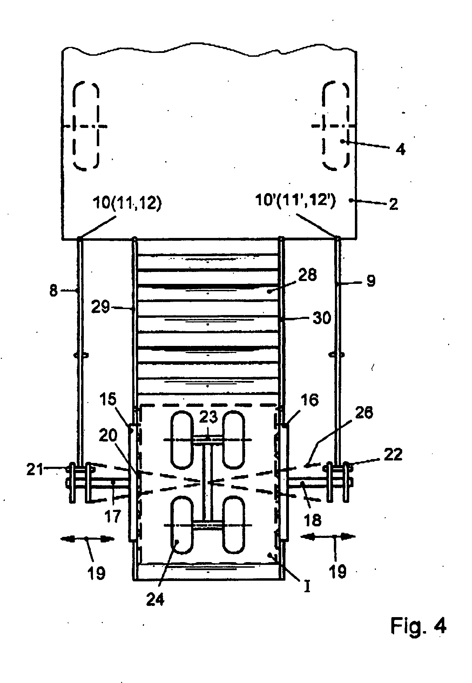

Oberhalb der Klemmplatten 15 und 16 ist an den Lagerböcken 21 und 22 der Greifarme 8 und 9 ein Niederhalter 23 zum Führen der zu einem Doppelpack gestapelten Halmgutballen I und II vorgesehen. Im vorliegenden Ausführungsbeispiel sind zwei Reifenzwillingspaare 24 und 25 als Niederhalter 23 vorgesehen, der an einer Traverse 26 (in Fig. 4 gestrichelt angedeutet) angeordnet sind, wobei die Traverse 26 mit den Lagerböcken 21 und 22 verbunden ist und gleichzeitig die Gegenkräfte der Klemmzylinder 17 und 18 aufnimmt.

Innerhalb des Staplers 6 ist als Lauffläche für die Halmgutballen I und II eine bei 27 an den freien Endabschnitt 5 der Ballenpresse 2 angebrachte Rollenbahn als eine Art Ballenrutsche 28 vorgesehen, die beidseitig durch eine Kette 29 und 30 zugbrückenartig mit ihrem Auslegerarm freischwebend an der Ballenpresse 2 gehalten ist.

Sämtliche Ablaufbewegungen des Staplers 6 sind durch nicht näher dargestellte Sensoren bestimmt, die an geeigneten Orten des Staplers 6 angeordnet sind. Als Wegbegrenzung für die in den Stapler 6 von der Ballenpresse 2 einlaufenden Halmgutballen, ist in dessen Transportbereich ein Tastrad vorgesehen, das mit den Sensoren der Greifarme 8 und 9 im Bereich der Hydraulikzylinder 13 und 14 in Wirkverbindung stehen. Ferner sind Sensoren an den Greifarmen 8 und 9 in der Weise angeordnet, dass durch sie deren untere und obere Position bestimmt ist, wobei die obere entsprechend in Fig. 2 dargestellte Position der Greifarme 8 und 9 mit einem angehobenen und durch die Klemmplatten 15 und 16 gehaltenen Halmgutballen I eine Höhe markiert, die zur Bildung eines Doppelpacks 31 größer ist als die Höhe eines unter diesem zu platzierenden Halmgutballens II.

Die Steuerung des erfindungsgemäßen Staplers 6 ist so ausgelegt, dass dessen Bewegungsabläufe automatisch ablaufen, wobei manuelle Eingriffe auch möglich sind. Im Einzelnen ist dieser Bewegungsablauf wie folgt:

In der Grundstellung befinden sich die Greifarme 8 und 9 in ihrer unteren Stellung bzw. Position entsprechend der Darstellung in Fig. 1 (ohne den dort eingezeichneten Halmgutballen I) und die Klemmplatten 15 und 16 sind geöffnet. Wenn nun ein fertiggepresster Ballen I den Presskanal 3 der Ballenpresse 2 verlässt, wird dieser von dem Tastrad erkannt und sein Transport auf der Rollenbahn 28 endet dann am Ort seiner Stapelausgangsposition (Fig. 1). Sodann legen sich die Klemmplatten 15 und 16 beidseitig an den Ballen I an und klemmen diesen zwischen sich mit Hilfe der Klemmzylinder 17 und 18 ein, und zwar so lange bis der voreingestellte Klemmdruck erreicht ist. Danach wird der Halmgutballen I entsprechend dem Pfeil 7 mit Hilfe der Hydraulikzylinder 13 und 14 in seine obere Position angehoben, welche erlaubt, dass der nachfolgende Halmgutballen II unter diesen fahren kann. Sodann verlässt der fertiggepresste Ballen II gemäß Fig. 2 den Presskanal 3 und wird wieder von dem Tastrad erkannt und sein Transport endet deckungsgleich unter dem angehobenen Halmgutballen I. Daraufhin öffnen sich die Klemmplatten 15 und 16, wodurch der angehobene Halmgutballen I auf dem Halmgutballen II abgelegt wird (Fig. 3). Dabei senkt sich der Niederhalter 23 mit seinen Reifenzwillingspaaren 24 und 25 auf die Oberfläche des Doppelpacks 31 und dieser wird von der Rollenbahn 28 auf das mit 32 bezeichnete Feld bzw. Boden in Richtung des Pfeils 33 geführt durch den Niederhalter 23 abgekippt bzw. abgelegt. Hierbei wird ein in diesem Bereich angeordneter Sensor betätigt, der sodann die Rollenrutsche 28 auf An- bzw. Abwesenheit eines Ballens überprüft und diese dann bei Anzeige Leerzustand freigibt, wodurch sich die Greifarme 8 und 9 wieder in ihre unter Position der Grundstellung absenken und der Stapelkreislauf beginnt von vorne.

**Bezugszeichenliste**

| | | | | | |
|---|---|---|---|---|---|
| 1 | Einrichtung | 34 | | 67 | |
| 2 | Ballenpresse | 35 | | 68 | |
| 3 | Presskanal | 36 | | 69 | |
| 4 | Räder | 37 | | 70 | |
| 5 | freier Endabschnitt | 38 | | 71 | |
| 6 | Stapler | 39 | | 72 | |
| 7 | Doppelpfeil | 40 | | 73 | |
| 8 | Greifarm | 41 | | 74 | |
| 9 | Greifarm | 42 | | 75 | |
| 10 | Anlenkung (10') | 43 | | 76 | |
| 11 | Anlenkung (11') | 44 | | 77 | |
| 12 | Anlenkung (12') | 45 | | 78 | |
| 13 | Hydraulikzylinder | 46 | | 79 | |
| 14 | Hydraulikzylinder | 47 | | | |
| 15 | Klemmplatte | 48 | | | |
| 16 | Klemmplatte | 49 | | | |
| 17 | Klemmzylinder | 50 | | | |
| 18 | Klemmzylinder | 51 | | | |
| 19 | Doppelpfeil | 52 | | | |
| 20 | Verankerung | 53 | | | |
| 21 | Lagerbock | 54 | | | |
| 22 | Lagerbock | 55 | | | |
| 23 | Niederhalter | 56 | | | |
| 24 | Reifenzwillingspaar | 57 | | | |
| 25 | Reifenzwillingspaar | 58 | | | |
| 26 | Traverse | 59 | | | |
| 27 | Anlenkungspunkt | 60 | | | |
| 28 | Rollenbahn | 61 | | | |
| 29 | Kette | 62 | | | |
| 30 | Kette | 63 | | | |
| 31 | Doppelpack | 64 | | | |
| 32 | Feld | 65 | | | |
| 33 | Pfeil | 66 | | | |

## Patentansprüche

1. Verfahren zum Stapeln von Halmgutballen, welche eine Ballenpresse unmittelbar als gepresste Ballen verlassen, wobei die gepressten Halmgutballen (I; II) nach dem Verlassen der Ballenpresse (2) einen mit dieser eine Einheit (1) bildenden Stapler (6) durchlaufen und dabei in diesem gestapelt werden, wobei mindestens zwei Halmgutballen (I; II) in dem Stapler (6) übereinander gestapelt werden und die gestapelten Halmgutballen (I; II) als Doppelpack (31) beim Fahren der Ballenpresse (2) z. B. auf einem Feld (32) abgelegt werden
**dadurch gekennzeichnet,**
**dass** oberhalb der Klemmplatten (15, 16) an den Greifarmen (8, 9) Niederhalter beim Durchführen des Ablegens verwendet werden.

2. Verfahren nach einem der vorhergehenden Ansprüche, **dadurch gekennzeichnet, dass** ein die Ballenpresse (2) verlassender erster Halmgutballen (I) in den Stapler (6) transportiert und dann nach Erreichen seiner Stapelanfangslage von dem Stapler (6) auf mindestens eine Höhe gehoben wird, die größer ist als die Höhe eines nachfolgenden zweiten Halmgutballes (II), sodann der zweite Halmgutballen (II) unter den angehobenen ersten Halmgutballen (I) bis zum Erreichen seiner Stapelanfangslagelage transportiert wird und dann der erste angehobene Halmgutballen (I) auf den zweiten Halmgutballen (II) abgesenkt und anschließend das entstandene Doppelpack (31), bestehend aus dem ersten und dem zweiten Halmgutballen (I; II), zur Ablage auf das Feld (32) aus dem Stapler (6) abgeführt wird.

3. Verfahren nach Anspruch 2, **dadurch gekennzeichnet, dass** jeder aus der Ballenpresse (2) kommende Halmgutballen (I bzw. II) durch ein Tast- bzw. Sternrad oder dgl. in seiner Bewegungslage derart erfasst wird, dass dieses mit dem Halmgutballen (I bzw. II) in Berührung gebracht und mit Erreichen der Ballenendkante dabei ein Signal über die Lage des Halmgutballens (I bzw. II) abgegeben wird und dann die Klemmplatten (15, 16) geöffnet werden, wobei dessen Ablauf durch Sensoren, wie induktive Näherungsschalter und Drucksensoren durchgeführt wird.

4. Verfahren nach Anspruch 3, **dadurch gekennzeichnet, dass** in der Grundstellung des Staplers (6) ein aus der Ballenpresse (2) kommender Halmgutballen (I) bis zu einer Stapelanfangslage innerhalb des Staplers (6) transportiert wird, sodann ein Signal erfolgt, welches Greifarme (8, 9) mit Klemmplatten (15, 16) in Bewegung setzt, zwischen denen zuerst der Halmgutballen (I) eingeklemmt und danach durch die Greifarme (8, 9) angehoben wird bis zu einer Höhe, die größer ist als die Höhe eines nachfolgenden Halmgutballens (II).

5. Verfahren nach Anspruch 4, **dadurch gekennzeichnet, dass** mit Erreichen des dem angehobenen Halmgutballens (I) nachfolgenden Halmgutballens (II) in seiner Stapelanfangslage innerhalb des Staplers (6) ein Signal initiiert wird, wobei durch ein Öffnen der Klemmplatten (15, 16) den vorher eingeklemmten Halmgutballen (I) zur Auflage auf den darunter positionierten Halmgutballen (II) freigibt.

6. Einrichtung zum Pressen und Stapeln von Halmgutballen, die eine Ballenpresse (2) und einen Stapler (6) umfasst, welche zusammen eine fahrbare Einheit (1) bilden, **dadurch gekennzeichnet, dass** oberhalb der Klemmplatten (15, 16) an den Greifarmen (8, 9) Niederhalter (23) zum Führen der zu einem Doppelpack (31) gestapelten Halmgutballen (I + II) vorgesehen sind.

7. Einrichtung nach Anspruch 6 mit einem Presskanal aufweisenden Ballenpresse, **dadurch gekennzeichnet, dass** sich am freien Endabschnitt (5) der Ballenpresse (2) unmittelbar der Stapler (6) anschließt.

8. Einrichtung nach Anspruch 7, **dadurch gekennzeichnet, dass** der Stapler (6) zwei parallel im Abstand zueinander angeordnete und in der Vertikalen schwenkbare, vorzugsweise als Parallelogramm ausgebildete Greifarme (8, 9) aufweist, die an der Ballenpresse (2) angelenkt (10 - 12; 10' -12') sind, wobei jeder Greifarm (8 bzw. 9) mittels eines Hydraulikzylinders (13 bzw. 14) in der Vertikalen schwenkbar ist.

9. Einrichtung nach Anspruch 8, **dadurch gekennzeichnet, dass** die Greifarme (8, 9) an ihrem freien Endabschnitten vertikale Klemmplatten (15, 16) zum Einklemmen mindestens eines Halmgutballes (I bzw. II) besitzen, die verstellbar sind, wobei die Klemmplatten (16, 17) jeweils mittels eines hydraulischen Klemmzylinders (17, 18) horizontal verstellbar sind und wobei die hydraulischen Klemmzylinder (17, 18) zur Einstellung eines geeigneten Klemmdrucks für die Klemmplatten (16, 17) mit einem Druckmesser in Verbindung stehen.

10. Einrichtung nach Anspruch 9, **dadurch gekennzeichnet, dass** die Klemmplatten (16, 17) auf Ihren den Halmgutballen (I bzw. II) zugewandten Innenflächen Verankerungen (20) zum besseren Halten der Halmgutballen (I bzw. II) aufweisen.

11. Einrichtung nach Anspruch 6, **dadurch gekennzeichnet, dass** zum Bestimmen der Ablaufbewegungen der Halmgutballen (I bzw. II) innerhalb des Staplers (6) von den Halmgutballen (I bzw. II) angetriebene Sternräder und/oder Tasträder verwendet sind und als Wegbegrenzung jedes in den Stapler (6) einlaufenden Halmgutballens (I bzw. II) ein in dessen Transportbereich angeordnetes Stern- bzw. Tastrad dient, welches mit Sensoren der Greiferarme (8, 9) im Bereich der Hydraulikzylinder (13, 14) in Wirkverbindung steht.

12. Einrichtung nach Anspruch 11, **dadurch gekennzeichnet, dass** die Sensoren an den Greifarmen (8, 9) in der Weise angeordnet sind, dass durch sie eine untere und eine obere Position der Greifarme (8, 9) bestimmbar ist, wobei die obere Position der Greifarme (8, 9) mit einem angehobenen und durch die Klemmplatten (15, 16) gehaltenen Halmgutballen (I) eine Höhe markiert, die zur Bildung eines Doppelpacks (31) größer ist als die Höhe eines unter diesen zu platzierenden Halmgutballens (II).

13. Einrichtung nach einem der vorhergehenden Ansprüche, **dadurch gekennzeichnet, dass** innerhalb des Staplers (6) als Lauffläche für die Halmgutballen (I; II) eine an die Ballenpresse (2) angelenkte (27) Rollenbahn (28) als eine Art Ballenrutsche dient und im Endbereich der Rollenbahn (28) Sensoren angeordnet sind, die eine An- oder Abwesenheit von Halmgutballen (I; II) signalisieren.

14. Einrichtung nach Anspruch 13, **dadurch gekennzeichnet, dass** die Rollenbahn (28) durch mindestens zwei Zugträger (29, 30), wie Ketten, Seile oder dgl. zugbrückenartig freischwebend an der Ballenpresse (2) gehalten ist.

15. Einrichtung nach wenigstens einem der Ansprüche 6 bis 14, **dadurch gekennzeichnet, dass** der Stapler (6) gegenüber der Ballenpresse bei Nichtgebrauch zum Herkömmlichen Betrieb der Ballenpresse noch oben wegschwenkbar ist.

## Claims

1. A method for stacking bales of crop stalks which leave a baler directly as compacted bales, wherein the compacted bales of crop stalks (I; II), after leaving the baler (2), pass through a stacker (6) which forms a unit (1) with said baler and in so doing are stacked therein, wherein at least two bales of crop stalks (I; II) are stacked one above the other in the stacker (6) and the stacked bales of crop stalks (I; II) are deposited e.g. on a field (32) as a brace (31) when the baler (2) is being driven, **characterised in that**
above the clamping plates (15, 16) on the gripping arms (8, 9) holding-down means are used when carrying out the depositing.

2. A method according to one of the preceding claims, **characterised in that** a first bale of crop stalks (I) leaving the baler (2) is transported into the stacker (6) and then, once it has reached its initial stacking position, is raised by the stacker (6) to at least a height which is greater than the height of a subsequent second bale of crop stalks (II), then the second bale of crop stalks (II) is transported under the raised first bale of crop stalks (I) until it attains its initial stacking position and then the first raised bale of crop stalks (I) is lowered onto the second bale of crop stalks (II) and then the resulting brace (31), consisting of the first and the second bale of crop stalks (I; II), is removed from the stacker (6) for depositing on the field (32).

3. A method according to Claim 2, **characterised in that** each bale of crop stalks (I or II) coming from the baler (2) is detected in its movement position by a feeler wheel or star wheel or the like such that said wheel is brought into contact with the bale of crop stalks (I or II) and upon reaching the bale end edge in so doing a signal about the position of the bale of stalk material (I or II) is emitted and then the clamping plates (15, 16) are opened, the sequence thereof being carried out by sensors, such as inductive proximity switches and pressure sensors.

4. A method according to Claim 3, **characterised in that** in the basic position of the stacker (6) a bale of crop stalks (I) coming from the baler (2) is transported up to an initial stacking position within the stacker (6), then a signal occurs which sets in motion gripping arms (8, 9) with clamping plates (15, 16), between which first of all the bale of crop stalks (I) is clamped and thereafter is raised by the gripping arms (8, 9) up to a height which is greater than the height of a subsequent bale of crop stalks (II).

5. A method according to Claim 4, **characterised in that** upon the bale of crop stalks (II) which succeeds the raised bale of crop stalks (I) attaining its initial stacking position within the stacker (6) a signal is initiated, with by opening the clamping plates (15, 16) releases the previously clamped bale of crop stalks (I) to lie on the bale of crop stalks (II) positioned thereunder.

6. A means for compacting and stacking bales of crop stalks, which comprises a baler (2) and a stacker (6), which together form a mobile unit (1), **characterised in that** holding-down means (23) for guiding the bales of crop stalks (I + II) which are stacked to form a brace (31) are provided above the clamping plates (15, 16) on the gripping arms (8, 9).

7. A means according to Claim 6 with baler having baling channel, **characterised in that** the stacker (6) directly adjoins the free end portion (5) of the baler (2).

8. A means according to Claim 7, **characterised in that** the stacker (6) has two gripping arms (8, 9) which are arranged parallel and spaced apart from one another and are pivotable in the vertical, which are preferably formed as a parallelogram, which are articulated (10 - 12; 10' -12') to the baler (2), each gripping arm (8 or 9) being pivotable in the vertical by means of a hydraulic cylinder (13 or 14, respectively).

9. A means according to Claim 8, **characterised in that** the gripping arms (8, 9) possess at their free end portions vertical clamping plates (15, 16) for clamping at least one bale of crop stalks (I or II), which plates are adjustable, the clamping plates (16, 17) being horizontally adjustable in each case by means of a hydraulic clamping cylinder (17, 18) and the hydraulic clamping cylinders (17, 18) being connected to a pressure gauge for setting a suitable clamping pressure for the clamping plates (16, 17).

10. A means according to Claim 9, **characterised in that** the clamping plates (16, 17) on their inner faces which face the bales of crop stalks (I or II) have anchoring means (20) to better hold the bales of crop stalks (I or II).

11. A means according to Claim 6, **characterised in that** for determining the movement sequences of the bales of crop stalks (I or II) within the stacker (6) star wheels and/or feeler wheels which are driven by the bales of crop stalks (I or II) are used, and for each bale of crop stalks (I or II) entering the stacker (6) a star wheel or feeler wheel arranged in the region of transport thereof serves as a path limitation, which wheel is in an operative connection with sensors of the gripper arms (8, 9) in the region of the hydraulic cylinders (13, 14).

12. A means according to Claim 11, **characterised in that** the sensors are arranged on the gripping arms (8, 9) in such a way that a lower and an upper position of the gripping arms (8, 9) can be determined by them, the upper position of the gripping arms (8, 9) with a raised bale of crop stalks (I) which is held by the clamping plates (15, 16) marks a height which for forming a brace (31) is greater than the height of a bale of crop stalks (II) which is to be placed thereunder.

13. A means according to one of the preceding claims, **characterised in that** within the stacker (6) as a running surface for the bales of crop stalks (I; II) a roller conveyor (28) articulated (27) to the baler (2) serves as a type of bale chute and in the end region of the roller conveyor (28) there are arranged sensors which signal the presence or absence of bales of crop stalks (I; II).

14. A means according to Claim 13, **characterised in that** the roller conveyor (28) is held floating freely in drawbridge-like manner on the baler (2) by at least two tension members (29, 30), such as chains, ropes or the like.

15. A means according to at least one of Claims 6 to 14, **characterised in that** the stacker (6) can be pivoted away upwards with respect to the baler when it is not being used, for conventional operation of the baler.

## Revendications

1. Procédé d'empilement de balles de matière en brins qui sortent d'une presse à balles directement sous forme de balles pressées, les balles de matière en brins pressées (I; II) passant, après avoir quitté la presse à balles (2), à travers un empileur (6) formant une unité (1) avec cette dernière et étant ainsi empilées dans ce dernier, au moins deux balles de matière en brins (I; II) étant empilées l'une au-dessus de l'autre dans l'empileur (6) et les balles de matière en brins empilées (I; II) étant disposées comme paquet double (31) pendant le déplacement de la presse à balles (2), par exemple sur un champ (32),
**caractérisé en ce**
**qu'**au-dessus des plaques de serrage (15, 16) sont utilisés, aux bras de préhension (8, 9), des abaisseurs lors de la réalisation du dépôt.

2. Procédé selon l'une quelconque des revendications précédentes, **caractérisé en ce qu'**une première balle de matière en brins (I) sortant de la presse à balles (2) est transportée vers l'empileur (6), puis, après avoir atteint sa position de début d'empilage, est levée par l'empileur (6) à au moins une hauteur qui est supérieure à la hauteur d'une deuxième balle de matière en brins (II) suivante, puis, la deuxième balle de matière en brins (II) est transportée sous la première balle de matière en brins levée (I) jusqu'à ce qu'elle atteigne sa position de début d'empilage, et ensuite la première balle de matière en brins levée (I) est abaissée sur la deuxième balle de matière en brins (II) et ensuite le paquet double résultant (31), composé de la première et de la deuxième balle de matière en brins (I; II), est évacué de l'empileur (6) pour être déposé sur le champ (32).

3. Procédé selon la revendication 2, **caractérisé en ce que** chaque balle de matière en brins (I ou II) sortant de la presse à balles (2) est saisie par une roue de jauge ou une roue étoile ou autre dans sa position de déplacement de sorte qu'elle soit mise en contact avec la balle de matière en brins (I ou II) et que lorsqu'est atteint le bord d'extrémité de balle soit émis un signal sur la position de la balle de matière en brins (I ou II), et que les plaques de serrage (15, 16) soient alors ouvertes, son déroulement étant réalisé par des capteurs, tels que des interrupteurs de proximité inductifs, et des capteurs de pression.

4. Procédé selon la revendication 3, **caractérisé en ce que**, dans la position de base de l'empileur (6), une balle de matière en brins (I) sortant de la presse à balles (2) est transportée jusqu'à une position de début d'empilement à l'intérieur de l'empileur (6), puis se produit un signal qui met les bras de préhension (8, 9) en mouvement avec les plaques de serrage (15, 16) entre lesquelles la balle de matière en brins (I) est tout d'abord serrée, ensuite levée par les bras de préhension (8, 9) jusqu'à une hauteur qui est supérieure à la hauteur d'un balle de matière en brins suivante (II).

5. Procédé selon la revendication 4, **caractérisé en ce que** lorsque la balle de matière en brins (II) suivant la balle de matière en brins levée (I) atteint sa position de début d'empilement à l'intérieur de l'empileur (6) est initié un signal, par l'ouverture des plaques de serrage (15, 16) étant libérée la balle de matière en brins préalablement serrée (I) pour venir reposer sur la balles de matière en brins positionnée au-dessous (II).

6. Dispositif de pressage et d'empilage de balles de matière en brins, comportant une presse à balles (2) et un empileur (6) qui forment ensemble une unité déplaçable (1), **caractérisé en ce qu'**au-dessus des plaques de serrage (15, 16) sont prévus, aux bras de préhension (8, 9), des abaisseurs (23) destinés à guider les balles de matière en brins empilées (I + II) empilées pour former un paquet double (31).

7. Dispositif selon la revendication 6 avec une presse à balles présentant un canal de pressage, **caractérisé en ce que** l'empileur (6) se raccorde directement au segment d'extrémité libre (5) de la presse à balles (2).

8. Dispositif selon la revendication 7, **caractérisé en ce que** l'empileur (6) présente deux bras de préhension (8, 9) parallèles disposés à une distance l'un de l'autre et pouvant pivoter dans la verticale, de préférence réalisés sous forme de parallélogramme, qui sont connectés de manière articulée (10 - 12; 10' -12') à la presse à balles (2), chaque bras de préhension (8 ou 9) pouvant pivoter dans la verticale au moyen d'un cylindre hydraulique (13 ou 14).

9. Dispositif selon la revendication 8, **caractérisé en ce que** les bras de préhension (8, 9) possèdent à leurs segments d'extrémité libres des plaques de serrage verticales (15, 16) pour serrer au moins une balle de matière en brins (I ou II) qui sont déplaçables, les plaques de serrage (16, 17) étant déplaçables, chacune, horizontalement au moyen d'un cylindre de serrage hydraulique (17, 18) et les cylindres de serrage hydraulique (17, 18) étant en communication avec un indicateur de pression pour régler une pression de serrage appropriée pour les plaques de serrage (16, 17).

10. Dispositif selon la revendication 9, **caractérisé en ce que** les plaques de serrage (16, 17) présentent, sur leurs surfaces intérieures orientées vers la balle de matière en brins (I ou II), des ancrages (20) pour un meilleur maintien des balles de matière en brins (I ou II).

11. Dispositif selon la revendication 6, **caractérisé en ce que** pour déterminer les mouvements de déroulement des balles de matière en brins (I ou II) dans l'empileur (6) sont utilisées des roues étoile ou de jauge entraînées par les balles de matière en brins (I ou II) et que comme limitation de trajet de chaque balle de matière en brins (I ou II) entrant dans l'empileur (6) sert une roue étoile ou de jauge disposée dans sa zone de transport qui est en communication active avec des capteurs des bras de préhension (8, 9) à l'endroit des cylindres hydrauliques (13, 14).

12. Dispositif selon la revendication 11, **caractérisé en ce que** les capteurs sur les bras de préhension (8, 9) sont disposés de sorte que grâce à eux puisse être déterminée une position inférieure et une position supérieure des bras de préhension (8, 9), la position supérieure des bras de préhension (8, 9) marquant, par une balle de matière en brins levée (I) et maintenue par les plaques de serrage (15, 16), une hauteur qui, pour former un paquet double (31), est supérieure à la hauteur d'une balle de matière en brins (II) placée sous cette dernière.

13. Dispositif selon l'une des revendications précédentes, **caractérisé en ce qu'**à l'intérieur de l'empileur (6) sert de surface de roulement pour les balles de matière en brins (I; II) un chemin de roulement (28) connecté de manière articulée (27) sous forme de glissière à balles à la presse à balles (2) et que dans la zone d'extrémité du chemin de roulement (28) sont disposés des capteurs qui signalent la présence ou l'absence d'une balle de matière en brins (I; II).

14. Dispositif selon la revendication 13, **caractérisé en ce que** le chemin de roulement (28) est maintenu sur la presse à balles (2) par au moins deux éléments de traction (29, 30), tels que des chaînes, des cordes ou autres, de manière librement flottante en forme de pont de traction.

15. Dispositif selon au moins l'une des revendications 6 à 14, **caractérisé en ce que** l'empileur (6) peut encore pivoter vers le haut par rapport à la presse à balles en cas de non-utilisation pour un fonctionnement conventionnel de la presse à balles.
